# EUROPEAN PATENT SPECIFICATION

(11) **EP 3 837 086 B1**
(45) Date of publication and mention of the grant of the patent: **25.09.2024**
(21) Application number: 19779121.3
(22) Date of filing: 07.08.2019
(51) Int. Cl.: B24B 37/22, B24D 3/20, C09K 3/14, B24D 11/00, B24D 18/00

(54) **STRUCTURED ABRASIVE ARTICLE AND METHOD OF MAKING THE SAME**
STRUKTURIERTER SCHLEIFARTIKEL UND VERFAHREN ZUR VERWENDUNG DAVON
ARTICLE ABRASIF STRUCTURÉ ET SON PROCÉDÉ DE FABRICATION

(30) Priority: 13.08.2018 US 201862718149 P
(43) Date of publication of application: 23.06.2021
(73) Proprietor: 3M Innovative Properties Company, Saint Paul, Minnesota 55133-3427 (US)
(72) Inventor: SMYTH, Damon, Bracknell Berkshire RG12 8HT (GB); PULLAN, Nicola, Bracknell Berkshire RG12 8HT (GB); CULLER, Scott R., Saint Paul, Minnesota 55133-3427 (US)
(74) Representative: De Clercq & Partners
(86) International application number: PCT/IB2019/056723
(87) International publication number: WO 2020/035764

(56) References cited:
- WO-A1-2018/080765
- US-A1- 2015 267 097

## Description

### TECHNICAL FIELD

The present disclosure broadly relates to abrasive articles containing a plurality of shaped abrasive composites adhered to a backing, and methods of making and using the same. Such a structured abrasive article is disclosed for example in US 2015/267097 A1, which is the basis for the preamble of claim 1. A method of making structured abrasive articles is known from WO 2018/080765 A1, which discloses a method comprising the steps:
a) providing a production tool having a mold surface defining a plurality of precisely-shaped cavities having a size corresponding to particles of 1 to 510 microns in length;
b) filling at least a majority of the precisely-shaped cavities with a slurry comprising magnetizable shaped abrasive platelets dispersed in a curable organic binder precursor material, wherein the magnetizable shaped abrasive platelets have a length of 1 to 510 microns;
c) contacting a tie layer disposed on a major surface of a backing with the mold surface of the production tool while the slurry is disposed within said at least a majority of the precisely-shaped cavities;
d) at least partially curing the curable organic binder precursor material to form shaped abrasive composites secured to the major surface of the backing; and
e) separating the shaped abrasive composites from the production tool,wherein the method is carried out without influence of an intentionally applied external magnetic field.

### BACKGROUND

Structured abrasive discs and belts are widely used in the abrasive art. Structured abrasives articles such as these typically include an abrasive layer having shaped abrasive composites (often a close-packed array of shaped abrasive composites) secured to a major surface of a backing. Each shaped abrasive composite has a bottom surface in contact with the backing and a distal end that extends outwardly from the backing. The shaped abrasive composites comprise abrasive particles dispersed in a binder matrix that includes a binder (organic or vitreous). The shaped abrasive composites are usually arranged in an array. In one common configuration of a structured abrasive article, the shaped abrasive composites are pyramids (e.g., 3-, 4-, or 6-sided), truncated pyramids (e.g., 3-, 4-, or 6-sided), prisms (e.g., 3-, 4-, or 6-sided). Many such structured abrasive articles are marketed by 3M Company, St. Paul, Minnesota under the trade designation "TRIZACT".

The shaped abrasive composites can have sizes ranging from very small (e.g., for automotive clearcoat finishing) or quite large (e.g., stock removal), depending on the application.

### SUMMARY

Many structured abrasive articles are designed for fine finishing applications and contain only fine grades of diluent crushed abrasive particles. However, such structured abrasive articles typically have relatively poor cut performance.

The present disclosure demonstrates that, unexpectedly, the inclusion of certain size grades of non-magnetizable shaped abrasive platelets in shaped abrasive composites of certain sizes results in superior cut performance as compared to other combinations of sizes of the non-magnetizable shaped abrasive platelets and shaped abrasive composites. Additionally, the superior cut performance is not accompanied by deep scratches characteristic of other abrasive products with comparable cut rates.

The present invention provides a structured abrasive article according to claim 1. Preferred embodiments are defined in the dependent claims.

The present invention further provides a method of making a structured abrasive article, the method according to claim 13. Preferred embodiments of the method are defined in the dependent claims.

As used herein:
The term "ceramic" refers to any of various hard, brittle, heat- and corrosion-resistant materials made of at least one metallic element (which may include silicon) combined with oxygen, carbon, nitrogen, or sulfur. Ceramics may be crystalline or polycrystalline, for example.

The term "ferrimagnetic" refers to materials that exhibit ferrimagnetism. Ferrimagnetism is a type of permanent magnetism that occurs in solids in which the magnetic fields associated with individual atoms spontaneously align themselves, some parallel, or in the same direction (as in ferromagnetism), and others generally antiparallel, or paired off in opposite directions (as in antiferromagnetism). The magnetic behavior of single crystals of ferrimagnetic materials may be attributed to the parallel alignment; the diluting effect of those atoms in the antiparallel arrangement keeps the magnetic strength of these materials generally less than that of purely ferromagnetic solids such as metallic iron. Ferrimagnetism occurs chiefly in magnetic oxides known as ferrites. The spontaneous alignment that produces ferrimagnetism is entirely disrupted above a temperature called the Curie point, characteristic of each ferrimagnetic material. When the temperature of the material is brought below the Curie point, ferrimagnetism revives.

The term "ferromagnetic" refers to materials that exhibit ferromagnetism. Ferromagnetism is a physical phenomenon in which certain electrically uncharged materials strongly attract others. In contrast to other substances, ferromagnetic materials are magnetized easily, and in strong magnetic fields the magnetization approaches a definite limit called saturation. When a field is applied and then removed, the magnetization does not return to its original value. This phenomenon is referred to as hysteresis. When heated to a certain temperature called the Curie point, which is generally different for each substance, ferromagnetic materials lose their characteristic properties and cease to be magnetic; however, they become ferromagnetic again on cooling.

The terms "magnetic" and "magnetized" mean being ferromagnetic or ferrimagnetic at 20°C, or capable of being made so, unless otherwise specified. Preferably, magnetizable layers according to the present disclosure either have, or can be made to have by exposure to an applied magnetic field, a magnetic moment of at least 0.001 electromagnetic units (emu), more preferably at least 0.005 emu, more preferably 0.01 emu, up to an including 0.1 emu, although this is not a requirement.

The term "magnetic field" refers to magnetic fields that are not generated by any astronomical body or bodies (e.g., Earth or the sun) or adventitiously by electrical wiring or circuitry.

The term "magnetizable" means capable of being magnetized or already in a magnetized state.

The term "non-magnetizable" means not magnetizable.

The terms "precisely-shaped ceramic body" refers to a ceramic body wherein at least a portion of the ceramic body has a predetermined shape that is replicated from a mold cavity used to form a precursor precisely-shaped ceramic body that is sintered to form the precisely-shaped ceramic body. A precisely-shaped ceramic body will generally have a predetermined geometric shape that substantially replicates the mold cavity that was used to form the shaped abrasive particle.

The term "precisely-shaped abrasive composite" refers to a shaped abrasive composite formed by a process in which it is formed by at least partially curing a slurry residing in a cavity in a mold before being removed from the mold such that the resulting abrasive composite substantially replicates the surface finish and/or shape of the cavity.

The term "shaped abrasive composite" refers to an abrasive composite that has been intentionally shaped (e.g., extruded, die cut, molded, screen-printed) at some point during its preparation such that the resulting shaped abrasive composite is non-randomly shaped. The term "shaped abrasive composite" as used herein excludes shaped abrasive composites obtained by a mechanical crushing or milling operation.

The term "shaped ceramic body" refers to a ceramic body that has been intentionally shaped (e.g., extruded, die cut, molded, screen-printed) at some point during its preparation such that the resulting ceramic body is non-randomly shaped. The term "shaped ceramic body" as used herein excludes non-magnetizable shaped abrasive platelets obtained by a mechanical crushing or milling operation.

The term "length" refers to the longest dimension of an object.

The term "width" refers to the longest dimension of an object that is perpendicular to its length.

The term "thickness" refers to the longest dimension of an object that is perpendicular to both of its length and width.

The term "aspect ratio" refers to the ratio length/thickness of an object.

The term "essentially free of" means containing less than 5 percent by weight (e.g., less than 4, 3, 2, 1, 0.1, or even less than 0.01 percent by weight, or even completely free) of, based on the total weight of the object being referred to.

The term "substantially" means within 35 percent (preferably within 30 percent, more preferably within 25 percent, more preferably within 20 percent, more preferably within 10 percent, and more preferably within 5 percent) of the attribute being referred to.

The suffix "(s)" indicates that the modified word can be singular or plural.

Features and advantages of the present disclosure will be further understood upon consideration of the detailed description as well as the appended claims.

### BRIEF DESCRIPTION OF THE DRAWINGS

FIG. 1 is a schematic cross-sectional side view of an exemplary structured abrasive article according to the present disclosure.
FIG. 2 shows SINGLE DISC TEST results for various sizes of abrasive particles and shaped composite sizes.

It should be understood that numerous other modifications and embodiments can be devised by those skilled in the art, which fall within the scope of the invention as defined by the claims.

The figures may not be drawn to scale.

### DETAILED DESCRIPTION

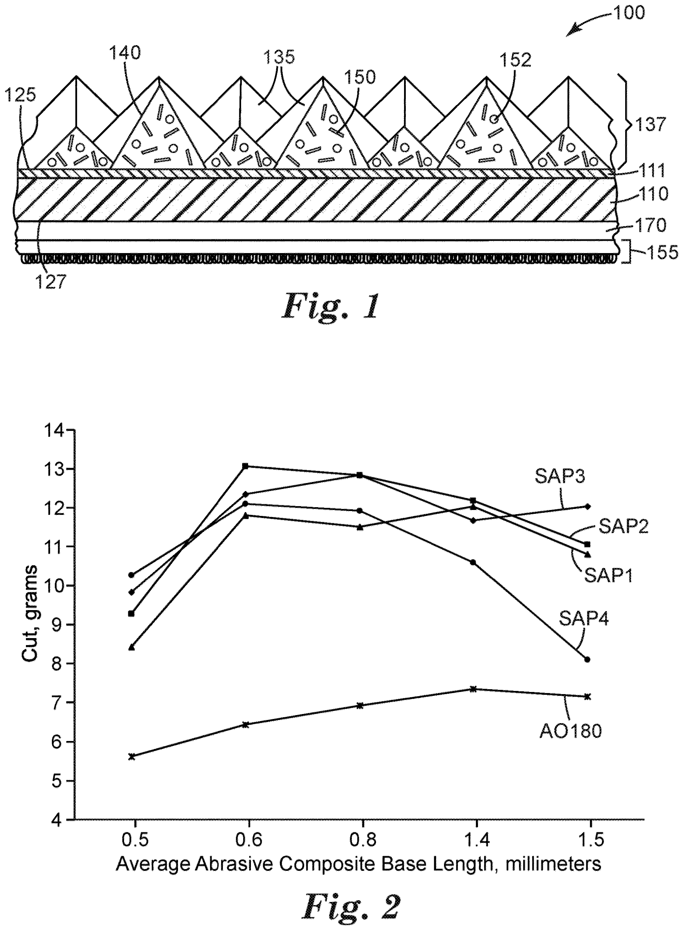

Referring now to FIG. 1, exemplary structured abrasive article 100 comprises a plurality of precisely-shaped pyramidal abrasive composites 135, forming abrasive layer 137, disposed on and secured to a first major surface 125 of optional tie layer 111 disposed on backing 110. Shaped abrasive composites 135 comprise non-magnetizable shaped abrasive platelets 150 and diluent crushed abrasive particles 152 retained in an organic binder 140. Optional attachment layer 155 is secured by optional adhesive layer 170 to second major surface 127 of backing 110 opposite first major surface 125.

The abrasive layer comprises shaped abrasive composites, each comprising non-magnetizable shaped abrasive platelets dispersed in an organic binder. The structured abrasive layer may be continuous or discontinuous, for example, it may have regions devoid of shaped abrasive composites.

Typically, the shaped abrasive composites forming the abrasive layer are arranged on the backing according to a predetermined pattern or array, although this is not a requirement. The shaped abrasive composites may have substantially identical shapes and/or sizes or a mixture of various shapes and/or sizes. Typically, essentially all of the shaped abrasive composites in the abrasive layer have the same size and shape, allowing for manufacturing tolerances (e.g., with respect to missing portions of some shaped abrasive composites or excess material that may be present), although different shapes and sizes are also permissible.

In preferred embodiments, the shaped abrasive composites are "precisely-shaped abrasive composites", although this is not a requirement. This means that the precisely-shaped abrasive composites are defined by relatively smooth surfaced sides that are bounded and joined by well-defined edges having distinct edge lengths with distinct endpoints defined by the intersections of the various sides. The terms "bounded" and "boundary" refer to the exposed surfaces and edges of each composite that delimit and define the actual three-dimensional shape of each precisely-shaped abrasive composite. These boundaries are readily visible and discernible when a cross-section of an abrasive article is viewed under a scanning electron microscope. These boundaries separate and distinguish one precisely-shaped abrasive composite from another even if the composites abut each other along a common border at their bottom surfaces. By comparison, in a shaped abrasive composite that does not have a precise shape, the boundaries and edges are not well-defined (e.g., where the abrasive composite sags before completion of its curing).

In some embodiments, the abrasive layer consists essentially (i.e., other than shapes due to manufacturing defects) of precisely-shaped abrasive composites. As used herein, the term "manufacturing defect" refers to an unintentional depression, air-void, or bubble in the shape of surface of the shaped abrasive composite that typically varies in location and/or size from one shaped abrasive composite to the next. By looking at the overall shape and pattern of many shaped abrasive composites in the abrasive article, the shaped abrasive composite defects are readily discernible when comparing the individual shaped abrasive composites in the abrasive layer. The abrasive layer of the structured abrasive may be continuous or discontinuous.

The shaped abrasive composites may comprise a close packed array; however, it may be useful to separate the shaped abrasive composites to control the load-bearing area of the structured abrasive article. As used herein, the term "load-bearing area", expressed as a percentage, refers to the combined area of all bottom surfaces of all shaped abrasive composites divided by the total area of the first surface of the backing. Typically, the load-bearing area is in a range of from 10 to about 100 percent, more typically in a range of from 60 to 98 percent, and still more typically in a range of from 80 to 95 percent, although this is not a requirement. Load-bearing areas less than 100 percent may be achieved, for example, by including channels between individual shaped abrasive composites, or between close packed arrays of the shaped abrasive composites.

The shaped (including precisely-shaped) abrasive composites have a shape that results in at least one of a raised feature or recess on the exposed surface of the abrasive layer. Useful shapes include, for example, square prisms, rectangular prisms, square pyramidal, rectangular pyramidal, truncated square pyramidal, and truncated rectangular pyramidal. Combinations of differently shaped and/or sized abrasive composites may also be used. The shaped abrasive composites may have planar and/or curved sides, for example. Preferably, the shaped abrasive composites comprise at least one of square pyramids or rectangular pyramids.

In some preferred embodiments, at least some of the shaped abrasive composites, on a respective basis, the four sides meet at a single vertex. In some preferred embodiments, the shaped abrasive composites comprise (or even consist of) square pyramids.

The abrasive layer comprises shaped abrasive composites, wherein each shaped abrasive composite has four sides, a height, and a base that faces the first major surface of the backing. In some preferred embodiments, the shaped abrasive composites have an average height of 410 to 650 microns (more preferably 440 microns to 640 microns, more preferably 460 to 640 microns, and even more preferably 460 microns to 510 microns) and an average side length at the base of 550 to 1500 microns (more preferably 550 microns to 800 microns, more preferably 600 to 800 microns, and even more preferably 625 microns to 770 microns). The foregoing ranges may be taken in any subcombination or respectively, for example.

The shaped abrasive composites comprise non-magnetizable shaped abrasive platelets retained in an organic binder. Organic binders (e.g., crosslinked organic polymers) are generally prepared by curing (i.e., crosslinking) a resinous organic binder precursor. Examples of suitable organic binder precursors include thermally-curable resins and radiation-curable resins, which may be cured, for example, thermally and/or by exposure to radiation. Exemplary organic binder precursors include glues, phenolic resins, aminoplast resins, urea-formaldehyde resins, melamine-formaldehyde resins, urethane resins, acrylic resins (e.g., aminoplast resins having pendant α,β-unsaturated groups, acrylated urethanes, acrylated epoxy resins, acrylated isocyanurates), acrylic monomer/oligomer resins, epoxy resins (e.g., including bismaleimide-modified and fluorene-modified epoxy resins), isocyanurate resins, an combinations thereof.

Curatives such as, for example, thermal initiators, catalysts, photoinitiators, and hardeners may be added to the organic binder precursor, typically selected and in an effective amount according to the resin system chosen. Selection of curative(s) and their amount is within the capabilities of those skilled in the art.

Typically, the organic binder is prepared by crosslinking (e.g., at least partially curing and/or polymerizing) an organic binder precursor. During the manufacture of the structured abrasive article, the organic binder precursor may be exposed to an energy source which aids in the initiation of polymerization (typically including crosslinking) of the organic binder precursor. Examples of energy sources include thermal energy and radiation energy which includes electron beam, ultraviolet light, and visible light. In the case of an electron beam energy source, curative is not necessarily required because the electron beam itself generates free radicals.

After this polymerization process, the organic binder precursor is converted into a solidified organic binder. Alternatively, for a thermoplastic organic binder precursor, during the manufacture of the abrasive article the thermoplastic organic binder precursor is cooled to a degree that results in solidification of the organic binder precursor. Upon solidification of the binder precursor, the abrasive composite is formed.

There are two main classes of polymerizable resins that may preferably be included in the organic binder precursor, condensation polymerizable resins and addition polymerizable resins. Addition polymerizable resins are advantageous because they are readily cured by exposure to radiation energy. Addition polymerized resins can polymerize, for example, through a cationic mechanism or a free-radical mechanism. Depending upon the energy source that is utilized and the binder precursor chemistry, a curing agent, initiator, or catalyst may be useful to help initiate the polymerization.

Examples of typical binder precursors include phenolic resins, urea-formaldehyde resins, aminoplast resins, urethane resins, melamine formaldehyde resins, cyanate resins, isocyanurate resins, (meth)acrylate resins (e.g., (meth)acrylated urethanes, (meth)acrylated epoxies, ethylenically-unsaturated free-radically polymerizable compounds, aminoplast derivatives having pendant alpha, beta-unsaturated carbonyl groups, isocyanurate derivatives having at least one pendant acrylate group, and isocyanate derivatives having at least one pendant acrylate group) vinyl ethers, epoxy resins, and mixtures and combinations thereof. As used herein, the term "(meth)acryl" encompasses acryl and methacryl.

Phenolic resins have good thermal properties, availability, and relatively low cost and ease of handling. There are two types of phenolic resins, resole and novolac. Resole phenolic resins have a molar ratio of formaldehyde to phenol of greater than or equal to one to one, typically in a range of from 1.5:1.0 to 3.0:1.0. Novolac resins have a molar ratio of formaldehyde to phenol of less than one to one. Examples of commercially available phenolic resins include those known by the trade designations DUREZ and VARCUM from Occidental Chemicals Corp., Dallas, Texas; RESINOX from Monsanto Co., Saint Louis, Missouri; and AEROFENE and AROTAP from Ashland Specialty Chemical Co., Dublin, Ohio.

(Meth)acrylated urethanes include di(meth)acrylate esters of hydroxyl-terminated NCO extended polyesters or polyethers. Examples of commercially available acrylated urethanes include those available as CMD 6600, CMD 8400, and CMD 8805 from Cytec Industries, West Paterson, New Jersey.

(Meth)acrylated epoxies include di(meth)acrylate esters of epoxy resins such as the diacrylate esters of bisphenol A epoxy resin. Examples of commercially available acrylated epoxies include those available as CMD 3500, CMD 3600, and CMD 3700 from Cytec Industries.

Ethylenically-unsaturated free-radically polymerizable compounds include both monomeric and polymeric compounds that contain atoms of carbon, hydrogen, and oxygen, and optionally, nitrogen and the halogens. Oxygen or nitrogen atoms or both are generally present in ether, ester, urethane, amide, and urea groups. Ethylenically-unsaturated free-radically polymerizable compounds typically have a molecular weight of less than about 4,000 g/mole and are typically esters made from the reaction of compounds containing a single aliphatic hydroxyl group or multiple aliphatic hydroxyl groups and unsaturated carboxylic acids, such as acrylic acid, methacrylic acid, itaconic acid, crotonic acid, isocrotonic acid, maleic acid, and the like. Representative examples of ethylenically-unsaturated free-radically polymerizable compounds include methyl methacrylate, ethyl methacrylate, styrene, divinylbenzene, vinyl toluene, ethylene glycol diacrylate, ethylene glycol methacrylate, hexanediol diacrylate, triethylene glycol diacrylate, trimethylolpropane triacrylate, glycerol triacrylate, pentaerythritol triacrylate, pentaerythritol methacrylate, and pentaerythritol tetraacrylate. Other ethylenically unsaturated resins include monoallyl, polyallyl, and polymethallyl esters and amides of carboxylic acids, such as diallyl phthalate, diallyl adipate, and *N*,*N*-diallyladipamide. Still other nitrogen containing compounds include tris(2-acryloyl-oxyethyl) isocyanurate, 1,3,5-tris(2-methyacryloxyethyl)-s-triazine, acrylamide, *N*-methylacrylamide, *N*,*N*-dimethylacrylamide, *N*-vinylpyrrolidone, and *N-*vinylpiperidone.

Useful aminoplast resins have at least one pendant alpha, beta-unsaturated carbonyl group per molecule or oligomer. These unsaturated carbonyl groups can be acrylate, methacrylate, or acrylamide type groups. Examples of such materials include *N*-(hydroxymethyl)acrylamide, *N*,*N*'-oxydimethylene-bisacrylamide, *ortho-* and *para-*acrylamidomethylated phenol, acrylamidomethylated phenolic novolac, and combinations thereof. These materials are further described in U. S. Pat. Nos. 4,903,440 and 5,236,472 (both to Kirk et al.).

Isocyanurate derivatives having at least one pendant acrylate group and isocyanate derivatives having at least one pendant acrylate group are further described in U. S. Pat. No. 4,652,274 (Boettcher et al.). An example of one isocyanurate material is the triacrylate of tris(hydroxyethyl) isocyanurate.

Epoxy resins have one or more epoxy groups that may be polymerized by ring opening of the epoxy group(s). Such epoxy resins include monomeric epoxy resins and oligomeric epoxy resins. Examples of useful epoxy resins include 2,2-bis[4-(2,3-epoxypropoxy)-phenyl propane] (diglycidyl ether of bisphenol) and materials available as EPON 828, EPON 1004, and EPON 1001F from Momentive Specialty Chemicals, Columbus, Ohio; and DER-331, DER-332, and DER-334 from Dow Chemical Co., Midland, Michigan. Other suitable epoxy resins include glycidyl ethers of phenol formaldehyde novolac commercially available as DEN-431 and DEN-428 from Dow Chemical Co.

Epoxy resins can polymerize via a cationic mechanism with the addition of an appropriate cationic curing agent. Cationic curing agents generate an acid source to initiate the polymerization of an epoxy resin. These cationic curing agents can include a salt having an onium cation and a halogen containing a complex anion of a metal or metalloid. Other curing agents (e.g., amine hardeners and guanidines) for epoxy resins and phenolic resins may also be used.

Other cationic curing agents include a salt having an organometallic complex cation and a halogen containing complex anion of a metal or metalloid which are further described in U. S. Pat. No. 4,751,138 (Tumey et al.). Another example is an organometallic salt and an onium salt is described in U. S. Pat. No. 4,985,340 (Palazzotto et al.); U. S. Pat. No. 5,086,086 (Brown-Wensley et al.); and U. S. Pat. No. 5,376,428 (Palazzotto et al.). Still other cationic curing agents include an ionic salt of an organometallic complex in which the metal is selected from the elements of Periodic Group IVB, VB, VIB, VIIB and VIIIB which is described in U. S. Pat. No. 5,385,954 (Palazzotto et al.).

Examples of free radical thermal initiators include peroxides, e.g., benzoyl peroxide and azo compounds.

Compounds that generate a free radical source if exposed to actinic electromagnetic radiation are generally termed photoinitiators. Examples of photoinitiators include benzoin and its derivatives such as α-methylbenzoin; α-phenylbenzoin; α-allylbenzoin: α-benzylbenzoin; benzoin ethers such as benzil dimethyl ketal (e.g., as commercially available as IRGACURE 651 from Ciba Specialty Chemicals, Tarrytown, New York), benzoin methyl ether, benzoin ethyl ether, benzoin n-butyl ether; acetophenone and its derivatives such as 2-hydroxy-2-methyl-1-phenyl-1-propanone (e.g., as DAROCUR 1173 from Ciba Specialty Chemicals) and 1-hydroxycyclohexyl phenyl ketone (e.g., as IRGACURE 184 from Ciba Specialty Chemicals); 2-methyl-1-[4-(methylthio)phenyl]-2-(4-morpholinyl)-1-propanone (e.g., as IRGACURE 907 from Ciba Specialty Chemicals; 2-benzyl-2-(dimethylamino)-1-[4-(4-morpholinyl)phenyl]-1-butanone (e.g., as IRGACURE 369 from Ciba Specialty Chemicals). Other useful photoinitiators include, for example, pivaloin ethyl ether, anisoin ethyl ether, anthraquinones (e.g., anthraquinone, 2-ethylanthraquinone, 1-chloroanthraquinone, 1,4-dimethylanthraquinone, 1-methoxyanthraquinone, or benzanthraquinone), halomethyltriazines, benzophenone and its derivatives, iodonium salts and sulfonium salts, titanium complexes such as bis(η₅-2,4-cyclopentadien-1-yl)-bis[2,6-difluoro-3-(1H-pyrrol-1-yl)phenyl]titanium (e.g., as CGI 784DC from Ciba Specialty Chemicals); halonitrobenzenes (e.g., 4-bromomethylnitrobenzene), mono- and bis-acylphosphines (e.g., as IRGACURE 1700, IRGACURE 1800, IRGACURE 1850, and DAROCUR 4265 all from Ciba Specialty Chemicals). Combinations of photoinitiators may be used. One or more spectral sensitizers (e.g., dyes) may be used in conjunction with the photoinitiator(s), for example, in order to increase sensitivity of the photoinitiator to a specific source of actinic radiation.

To promote an association bridge between the abovementioned binder and abrasive particles (e.g., non-magnetizable shaped abrasive platelets and/or diluent crushed abrasive particles), a silane coupling agent may be included in a slurry of the abrasive particles and organic binder precursor; typically in an amount of from about 0.01 to 5 percent by weight, more typically in an amount of from about 0.01 to 3 percent by weight, more typically in an amount of from about 0.01 to 1 percent by weight, although other amounts may also be used, for example depending on the size of the abrasive particles. Suitable silane coupling agents include, for example, methacryloxypropylsilane, vinyltriethoxysilane, vinyltris(2-methoxyethoxy)silane, 3,4-epoxycyclohexylmethyltrimethoxysilane, γ-glycidoxypropyltrimethoxysilane, and γ-mercaptopropyltrimethoxysilane (e.g., as available under the respective trade designations A-174, A-151, A-172, A-186, A-187, and A-189 from Witco Corp. of Greenwich, Connecticut), allyltriethoxysilane, diallyldichlorosilane, divinyldiethoxysilane, and *meta, para-*styrylethyltrimethoxysilane (e.g., as commercially available under the respective trade designations A0564, D4050, D6205, and S 1588 from United Chemical Industries, Bristol, Pennsylvania), dimethyldiethoxysilane, dihydroxydiphenylsilane, triethoxysilane, trimethoxysilane, triethoxysilanol, 3-(2-aminoethylamino)propyltrimethoxysilane, methyltrimethoxysilane, vinyltriacetoxysilane, methyltriethoxysilane, tetraethyl orthosilicate, tetramethyl orthosilicate, ethyltriethoxysilane, amyltriethoxysilane, ethyltrichlorosilane, amyltrichlorosilane, phenyltrichlorosilane, phenyltriethoxysilane, methyltrichlorosilane, methyldichlorosilane, dimethyldichlorosilane, dimethyldiethoxysilane, and mixtures thereof.

The organic binder precursor may optionally contain additives such as, for example, colorants, grinding aids, diluent crushed abrasive particles, fillers, wetting agents, dispersing agents, light stabilizers, and antioxidants.

Grinding aids, which may optionally be included in the abrasive layer via the organic binder precursor, encompass a wide variety of different materials including both organic and inorganic compounds. A sampling of chemical compounds effective as grinding aids includes waxes, organic halide compounds, halide salts, metals and metal alloys. Specific waxes effective as a grinding aid include specifically, but not exclusively, the halogenated waxes tetrachloronaphthalene and pentachloronaphthalene. Other effective grinding aids include halogenated thermoplastics, sulfonated thermoplastics, waxes, halogenated waxes, sulfonated waxes, and mixtures thereof. Other organic materials effective as a grinding aid include specifically, but not exclusively, polyvinylchloride and polyvinylidene chloride. Examples of halide salts generally effective as a grinding aid include sodium chloride, potassium cryolite, sodium cryolite, ammonium cryolite, potassium tetrafluoroborate, sodium tetrafluoroborate, silicon fluorides, potassium chloride, and magnesium chloride. Halide salts used as a grinding aid typically have an average particle size of less than 100 microns, with particles of less than 25 microns being preferred. Examples of metals generally effective as a grinding aid include antimony, bismuth, cadmium, cobalt, iron, lead, tin, and titanium. Other commonly used grinding aids include sulfur, organic sulfur compounds, graphite, and metallic sulfides. Combinations of these grinding aids can also be used.

Useful abrasive materials that can be used in non-magnetizable shaped abrasive platelets and/or diluent crushed abrasive particles include, for example, fused aluminum oxide, heat treated aluminum oxide, white fused aluminum oxide, ceramic aluminum oxide materials such as those commercially available as 3M CERAMIC ABRASIVE GRAIN from 3M Company of St. Paul, Minnesota, black silicon carbide, green silicon carbide, titanium diboride, boron carbide, tungsten carbide, titanium carbide, cubic boron nitride, garnet, fused alumina zirconia, sol-gel derived ceramics (e.g., alumina ceramics doped with chromia, ceria, zirconia, titania, silica, and/or tin oxide), silica (e.g., quartz, glass beads, glass bubbles and glass fibers), feldspar, or flint. Preferred abrasive materials comprise α-alumina derived from a sol-gel or slurry process. Examples of sol-gel-derived abrasive particles can be found in U. S. Pat. Nos. 4,314,827 (Leitheiser et al.), 4,623,364 (Cottringer et al.); 4,744,802 (Schwabel), 4,770,671 (Monroe et al.); and 4,881,951 (Monroe et al.); 5,152,917 (Pieper et al.), 5,213,591 (Celikkaya et al.), 5,435,816 (Spurgeon et al.), 5,672,097 (Hoopman et al.), 5,946,991 (Hoopman et al.), 5,975,987 (Hoopman et al.), and 6,129,540 (Hoopman et al.), and in U. S. Publ. Pat. Appln. Nos. 2009/0165394 (Culler et al.) and 2009/0169816 A1 (Erickson et al.). U. S. Pat. Appln. Publ. No. 2015/0267097 (Rosenflanz et al.) describes slurry-derived abrasive particles.

Non-magnetizable shaped abrasive platelets, including precisely-non-magnetizable shaped abrasive platelets may be prepared by a molding process using sol-gel technology as described in U. S. Pat. Nos. 5,201,916 (Berg); 5,366,523 (Rowenhorst (Re 35,570)); and 5,984,988 (Berg). U. S. Pat. No. 8,034,137 (Erickson et al.) describes alumina particles that have been formed in a specific shape, then crushed to form shards that retain a portion of their original shape features. In some embodiments, the non-magnetizable shaped abrasive platelets are precisely-shaped (i.e., the non-magnetizable shaped abrasive platelets have shapes that are at least partially determined by the shapes of cavities in a production tool used to make them).

Alternative shapes of non-magnetizable shaped abrasive platelets include truncated pyramids (e.g., 3-, 4-, 5-, or 6-sided truncated pyramids) and prisms (e.g., 3-, 4-, 5-, or 6-sided prisms). In some preferred embodiments, the non-magnetizable shaped abrasive platelets comprise triangular prisms, truncated triangular pyramids, or a combination thereof. The non-magnetizable shaped abrasive platelets according to the invention have a triangular shape.

In alternatives not falling under the scope of the present invention, the shaped abrasive composites comprise at least one of square pyramids or rectangular pyramids. Exemplary details concerning non-magnetizable shaped abrasive platelets and methods for their preparation can be found, for example, in U. S. Pat. Nos. 8,142,531 (Adefris et al.); 8,142,891 (Culler et al.); and 8,142,532 (Erickson et al.); and in U. S. Pat. Appl. Publ. Nos. 2012/0227333 (Adefris et al.); 2013/0040537 (Schwabel et al.); and 2013/0125477 (Adefris).

Non-magnetizable shaped abrasive platelets and optional diluent crushed abrasive particles according to the present disclosure may be independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). ANSI grade designations (i.e., specified nominal grades) include, for example: ANSI 120, ANSI 150, ANSI 180, and ANSI 220. FEPA grade designations include, for example, F120, F150, F180, F220. JIS grade designations include, for example, JIS120, JIS150, JIS180, and JIS220.

Alternatively, the non-magnetizable abrasive platelets and/or optional diluent crushed abrasive particles can be graded to a nominal screened grade using U. S. A. Standard Test Sieves conforming to ASTM E-11 "Standard Specification for Wire Cloth and Sieves for Testing Purposes". ASTM E-11 prescribes the requirements for the design and construction of testing sieves using a medium of woven wire cloth mounted in a frame for the classification of materials according to a designated particle size. A typical designation may be represented as -100+120 meaning that the shaped abrasive particles pass through a test sieve meeting ASTM E-11 specifications for the number 100 sieve and are retained on a test sieve meeting ASTM E-11 specifications for the number 120 sieve. Exemplary such grades may include -100+120, -120+150, -150+180, -180+220, although other combinations may be used.

The non-magnetizable shaped abrasive platelets have an average side length of 180 to 350 microns (preferably 180 to 330 microns, more preferably 260 to 330 microns) and an average thickness of 60 to 120 microns (preferably 60 to 100 microns). The foregoing ranges may be taken in any subcombination or respectively, for example.

The non-magnetizable shaped abrasive platelets should not have magnetizable layers or inclusions. While the non-magnetizable shaped abrasive platelets may, in some embodiments, contain various grain size modifiers (e.g., alumina, iron oxide, neodymium or other rare earth salts), they should not be in sufficient amount to render the shaped abrasive platelets magnetizable. In some preferred embodiments, the non-magnetizable shaped abrasive platelets are free of added iron or rare earth grain size modifiers.

According to the invention at least 60 percent, at least 70 percent, at least 80 percent, at least 90 percent, or even all of the non-magnetizable shaped abrasive platelets comprise non-magnetizable triangular abrasive platelets.

In some preferred embodiments, the structured abrasive composites further comprise diluent crushed abrasive particles, which may comprise an abrasive material described hereinabove. If present, the diluent crushed abrasive particles are preferably of the same or smaller size grade (e.g., as determined by sieve size) than the non-magnetizable shaped abrasive platelets; however, this is not a requirement. If present, the ratio of the non-magnetizable shaped abrasive platelets to the diluent crushed abrasive particles is preferably 0.67 to 1.5, more preferably about 1.0; however, this is not a requirement.

In one embodiment, a slurry of abrasive particles, which comprises non-magnetizable shaped abrasive particles, and optionally diluent crushed (preferably non-magnetizable) abrasive particles, in an organic binder precursor may be coated directly onto a production tool having shaped cavities (preferably cavities formed of planar surfaces that intersect at sharp angles) therein and brought into contact with the backing (or if present, an optional tie layer on the backing). The cavities are shaped and sized to be complementary to the designed shape of working surface of the abrasive layer in the ultimate resultant structural abrasive article. That is the cavities will have nominal dimensions and location of corresponding shaped abrasive composites. The slurry is then at least partially cured to form shaped abrasive composites disposed on the major surface of the backing and still within the cavities of the mold surface of the production tool. In this embodiment, the slurry is typically then solidified (e.g., at least partially cured) while it is present in the cavities of the production tool. Finally, the shaped abrasive composites are separated from the production tool thereby providing a structured abrasive article according to the present disclosure.

The production tool can be a belt, a sheet, a continuous sheet or web, a coating roll such as a rotogravure roll, a sleeve mounted on a coating roll, or die. The production tool can be composed of metal (e.g., nickel), metal alloys, or plastic. A metal production tool can be fabricated by any conventional technique such as, for example, engraving, bobbing, electroforming, or diamond turning. A thermoplastic tool can be replicated off a metal master tool. The master tool will have the inverse pattern desired for the production tool. The master tool can be made in the same manner as the production tool. The master tool is preferably made out of metal, e.g., nickel and is diamond turned. The thermoplastic sheet material can be heated along with the master tool such that the thermoplastic material is embossed with the master tool pattern by pressing the two together. The thermoplastic can also be extruded or cast onto the master tool and then pressed. The thermoplastic material is cooled to solidify and produce the production tool. Examples of thermoplastic production tool materials include polyester, polycarbonates, polyvinyl chloride, polypropylene, polyethylene and combinations thereof. If a thermoplastic production tool is utilized, then care should typically be taken not to generate excessive heat that may distort the thermoplastic production tool.

The production tool may also contain a release coating to permit easier release of the abrasive article from the production tool. Examples of such release coatings for metals include hard carbide, nitrides or borides coatings. Examples of release coatings for thermoplastics include silicones, and fluorochemicals.

Preferably, the above-described method is carried out without influence of an intentionally applied external magnetic field that may tend to align any magnetic particles that may be present.

Additional details concerning methods of manufacturing structured abrasive articles having precisely-shaped abrasive composites may be found, for example, in U. S. Pat. No. 5,152,917 (Pieper et al.); U. S. Pat. No. 5,435,816 (Spurgeon et al.); U. S. Pat. No. 5,672,097 (Hoopman); U. S. Pat. No. 5,681,217 (Hoopman et al.); U. S. Pat. No. 5,454,844 (Hibbard et al.); U. S. Pat No. 5,851,247 (Stoetzel et al.); and U. S. Pat. No. 6,139,594 (Kincaid et al.).

Examples of useful backings include films, foams (open cell or closed cell), papers, foils, and fabrics. The backing may be, for example, a thermoplastic film that includes a thermoplastic polymer, which may contain various additive(s). Examples of suitable additives include colorants, processing aids, reinforcing fibers, heat stabilizers, UV stabilizers, and antioxidants. Examples of useful fillers include clays, calcium carbonate, glass beads, talc, clays, mica, wood flour; and carbon black. The backing may be a composite film, for example a coextruded film having two or more discrete layers.

Optionally, backings used in coated abrasive articles may be treated with one or more applied coatings. Examples of typical backing treatments are a backsize layer (i.e., a coating on the major surface of the backing opposite the abrasive layer), a presize layer or a tie layer (i.e., a coating on the backing disposed between the abrasive layer and the backing), and/or a saturant that saturates the backing. A subsize is similar to a saturant, except that it is applied to a previously treated backing.

Exemplary tie layers include acrylic polymers formed by at least partially curing a curable tie coat comprising free-radially polymerizable monomers and/or oligomers, typically in the presence of a free-radical polymerization initiator (e.g., a thermal or photoinitiator). Exemplary acrylic polymers and corresponding precursors and curatives are discussed elsewhere herein. Tie layers and methods of making them are also disclosed in, for example, U. S. Patent No. 7150,770 (Keipert et al.).

Suitable thermoplastic polymers include, for example, polyolefins (e.g., polyethylene, and polypropylene), polyesters (e.g., polyethylene terephthalate), polyamides (e.g., nylon-6 and nylon-6,6), polyimides, polycarbonates, and combinations and blends thereof.

Typically, the average thickness of the backing is in a range of from at least 1 mil (25 microns) to 100 mils (2.5 mm), although thicknesses outside of this range may also be used.

An optional supersize may be disposed on at least a portion of the abrasive layer. For example, a supersize may be disposed only on the shaped abrasive composites (e.g., on their top surfaces), although it may also be disposed on channels between them. Examples of supersizes include one or more compounds selected from the group consisting of secondary grinding aids such as alkali metal tetrafluoroborate salts, metal salts of fatty acids (e.g., zinc stearate or calcium stearate), and salts of phosphate esters (e.g., potassium behenyl phosphate), phosphate esters, urea-formaldehyde resins, mineral oils, crosslinked silanes, crosslinked silicones, and/or fluorochemicals; fibrous materials; antistatic agents; lubricants; surfactants; pigments; dyes; coupling agents; plasticizers: antiloading agents; release agents; suspending agents; rheology modifiers; curing agents; and mixtures thereof. A secondary grinding aid is preferably selected from the group of sodium chloride, potassium aluminum hexafluoride, sodium aluminum hexafluoride, ammonium aluminum hexafluoride, potassium tetrafluoroborate, sodium tetrafluoroborate, silicon fluorides, potassium chloride, magnesium chloride, and mixtures thereof. In some embodiments, one or more metal salts of fatty acids (e.g., zinc stearate) may be usefully included in the supersize.

The structured abrasive article may optionally include an attachment interface layer such as, for example, a hooked film, looped fabric, or pressure-sensitive adhesive, secured to the backing, that affixes the structured abrasive article to a tool or backup pad during use.

Useful pressure-sensitive adhesives (PSAs) include, for example, hot melt PSAs, solvent-based PSAs, and latex-based PSAs. Pressure-sensitive adhesives are widely commercially available; for example, from 3M Company. The PSA layer, if present may be coated onto the backing any suitable technique including, for example, spraying, knife coating, and extrusion coating. In some embodiments, a release liner may be disposed on the pressure-sensitive layer to protect it prior to use. Examples of release liners include polyolefin films and siliconized papers.

Structured abrasive articles according to the present disclosure may be secured to a support structure such, for example, a backup pad secured to a tool such as, for example, a random orbital sander. The optional attachment interface layer may be, for example an adhesive (e.g., a pressure-sensitive adhesive) layer, a double-sided adhesive tape, a loop fabric for a hook and loop attachment (e.g., for use with a backup or support pad having a hooked structure affixed thereto), a hooked structure for a hook and loop attachment (e.g., for use with a backup or support pad having a looped fabric affixed thereto), or an intermeshing attachment interface layer (e.g., mushroom type interlocking fasteners designed to mesh with a like mushroom type interlocking fastener on a backup or support pad). Further details concerning such attachment interface layers may be found, for example, in U. S. Pat. Nos. 5,152,917 (Pieper et al.); 5,254,194 (Ott); 5,454,844 (Hibbard et al.); and 5,681,217 (Hoopman et al.); and U. S. Pat. Appl. Publ. Nos. 2003/0143938 (Braunschweig et al.) and 2003/0022604 (Annen et al.).

Likewise, the second major surface of the backing may have a plurality of integrally formed hooks protruding therefrom, for example, as described in U. S. Pat. No. 5,672,186 (Chesley et al.). These hooks will then provide the engagement between the structured abrasive article and a backup pad that has a loop fabric affixed thereto.

Structured abrasive articles according to the present disclosure may be provided in any form (for example, as a sheet, belt, or disc), and be of any overall dimensions. Embossed structured abrasive discs may have any diameter, but typically have a diameter in a range of from 0.5 centimeter to 15.2 centimeters. The structured abrasive article may have slots or slits therein and may be otherwise provided with perforations.

Structured abrasive articles according to the present disclosure are generally useful for abrading a workpiece, and especially those workpieces having a hardened polymeric layer thereon. The workpiece may comprise any material and may have any form. Examples of workpiece materials include metal, metal alloys, exotic metal alloys, ceramics, painted surfaces, plastics, polymeric coatings, stone, polycrystalline silicon, wood, marble, and combinations thereof. Examples of workpieces include molded and/or shaped articles (e.g., optical lenses, automotive body panels, boat hulls, counters, and sinks), wafers, sheets, and blocks.

A lubricating fluid may be used in conjunction with the structured abrasive article during abrading operations. Examples include oils, water, and surfactant solutions in water (e.g., anionic or nonionic surfactant solutions in water).

Objects and advantages of this disclosure are further illustrated by the following non-limiting examples, but the particular materials and amounts thereof recited in these examples, as well as other conditions and details, should not be construed to unduly limit this disclosure. The scope of the invention is defined by the claims.

### EXAMPLES

Unless otherwise noted, all parts, percentages, ratios, etc. in the Examples and the rest of the specification are by weight. Materials used in the Examples are described in Table 1, below.

**TABLE 1**

| ABBREVIATION | DESCRIPTION |
|---|---|
| AO 180 | P180 fused aluminium oxide abrasive particles, obtained from Washington Mills Electro Minerals Company, Niagara Falls, New York |
| KBF4 | Potassium tetrafluoroborate, obtained from Atotech USA, Inc., Cleveland, Ohio |
| PI | 2-benxyl-2-N,N dimethylamino-1-(4-morpholinophenyl)-1-butanone, available as IRGACURE 369 from BASF Corporation, Florham Park, New Jersey |
| SAP1 | Non-magnetizable shaped abrasive platelets were prepared according to the disclosure of U. S. Pat. 8,142,531 (Adefris et al). The non-magnetizable shaped abrasive platelets were prepared by molding alumina sol gel in equilateral triangle-shaped polypropylene mold cavities. After drying and firing, the resulting non-magnetizable shaped abrasive platelets were about 0.17 mm (side length) × 0.04 mm thick, with a draft angle approximately 98 degrees. |
| SAP2 | Non-magnetizable shaped abrasive platelets prepared in a similar manner to SAP1. The resultant non-magnetizable shaped abrasive platelets were about 0.18 mm (side length) × 0.04 mm thick, with a draft angle approximately 98 degrees. |
| SAP3 | Non-magnetizable shaped abrasive platelets prepared in a similar manner to SAP 1. The resultant non-magnetizable shaped abrasive platelets were about 0.26 mm (side length) × 0.06 mm thick, with a draft angle approximately 98 degrees. |
| SAP4 | Non-magnetizable shaped abrasive platelets prepared in a similar manner to SAP 1. The resultant non-magnetizable shaped abrasive platelets were about 0.33 mm (side length) × 0.10 mm thick, with a draft angle approximately 98 degrees. |
| SCA | Silane coupling agent, γ-methacryloxypropyltrimethoxysilane, obtained as A-174 from Momentive Performance Materials, Sisterville, West Virginia |
| SIL | Hydrophilic fumed silica, obtained as AEROSIL OX-50 from Evonik Industries, Essen, Germany |
| TATHEIC | Triacrylate of tris(hydroxyethyl) isocyanurate, obtained as SR368 from Sartomer, Exton, Pennsylvania |
| TMPTA | Trimethylolpropane triacrylate, available as SARTOMER 351 from Sartomer, Exton, Pennsylvania |
| TCDDMDA | Tricyclodecanedimethanol diacrylate, available as SARTOMER 833S from Sartomer Europe. |
| TOOL1 | A patterned polypropylene tool with pyramidal cavities prepared according to the disclosure of U. S. Pat. No. 5,435,816 (Spurgeon et al.), column 8, line 41 through column 10, line 20. The patterned polypropylene tooling's pattern was an array of four-sided pyramids 14 mils (0.36 mm) high x 18.75 mils (0.4762 mm) average square base length having a land area of 0.591 mils (0.015 mm) between features and a feature density of 4.41 features/mm². |
| TOOL2 | Similar to TOOL 1, except the patterned polypropylene tooling's pattern was an array of four-sided pyramids 18 mils (0.46 mm) high x 25 mils (0.635 mm) average square base length having a land area of 0.433 mils (0.011 mm) between features and a feature density of 2.48 features/mm². |
| TOOL3 | Similar to TOOL 1, except the patterned polypropylene tooling's pattern was an array of four-sided pyramids 20 mils (0.51 mm) high x 29.7 mils (0.755 mm) average square base length having a land area of 1.181 mils (0.030 mm) between features and a feature density of 1.76 features/mm². |
| TOOL4 | Similar to TOOL 1, except the patterned polypropylene tooling's pattern was an array of four-sided pyramids 25 mils (0.64 mm) high x 56.24 mils (1.429 mm) average square base length having a land area of 2.008 mils (0.051 mm) between features and a feature density of 0.49 features/mm²). |
| TOOL5 | Similar to TOOL 1, except the patterned polypropylene tooling's pattern was an array of four-sided pyramids 30 mils (0.76 mm) high x 60.57 mils (1.539 mm) average square base length having a land area of 2.00 mils (0.050 mm) between features and a feature density of 0.42 features/mm²). |

### COMPARATIVE EXAMPLE A

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP1 were homogeneously dispersed for one hour using a mechanical mixer. The resultant slurry was coated into TOOL1 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL1, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System UV Conveyor System using a D-type bulb at 100% power, and 5 m/min belt speed to cure. TOOL1 was then peeled away from the cured slurry to yield a structured abrasive sample.

### EXAMPLE 1

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP1 were homogeneously dispersed for one hour using a mechanical mixer. The resultant slurry was coated into TOOL2 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL2, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL2 was then peeled away from the cured slurry to yield a structured abrasive sample.

### EXAMPLE 2

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP1 were homogeneously dispersed for one hour using a mechanical mixer. The resultant slurry was coated into TOOL3 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL3, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL3 was then peeled away from the cured slurry to yield a structured abrasive sample.

### EXAMPLE 3

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP1 were homogeneously dispersed for one hour using a mechanical mixer. The resultant slurry was coated into TOOL4 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL4, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL4 was then peeled away from the cured slurry to yield a structured abrasive sample.

### COMPARATIVE EXAMPLE B

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP2 were homogeneously dispersed for one hour using a mechanical mixer. The resultant slurry was coated into TOOL1 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL1, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL1 was then peeled away from the cured slurry to yield a structured abrasive sample.

### EXAMPLE 4

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP2 were homogeneously dispersed for one hour using a mechanical mixer. The resultant slurry was coated into TOOL2 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL2, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL2 was then peeled away from the cured slurry to yield a structured abrasive sample.

### EXAMPLE 5

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP2 were homogeneously dispersed for one hour using a mechanical mixer. The resultant slurry was coated into TOOL3 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL3, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL3 was then peeled away from the cured slurry to yield a structured abrasive sample.

### EXAMPLE 6

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP2 were homogeneously dispersed for one hour using a mechanical mixer. The resultant slurry was coated into TOOL4 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL4, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL4 was then peeled away from the cured slurry to yield a structured abrasive sample.

### COMPARATIVE EXAMPLE C

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP3 were homogeneously dispersed for one hour using a mechanical mixer. The resultant slurry was coated into TOOL1 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL1, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL1 was then peeled away from the cured slurry to yield a structured abrasive sample.

### EXAMPLE 7

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP3 were homogeneously dispersed for one hour using a mechanical mixer. The resultant slurry was coated into TOOL2 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL2, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL2 was then peeled away from the cured slurry to yield a structured abrasive sample.

### EXAMPLE 8

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP3 were homogeneously dispersed for one hour using a mechanical mixer. The resultant slurry was coated into TOOL3 using a 75 mm (3 inches) wide metal scraper.

Separately a UV curable tie-coat comprising 99 parts TCDDMDA, and1 part Irgacure 651 was coated onto a sample of Tencel J-weight cloth using a 10 µm wire-wound bar coater.

The surface of TOOL3, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL3 was then peeled away from the cured slurry to yield a structured abrasive sample.

### EXAMPLE 9

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP3 were homogeneously dispersed for one hour using a mechanical mixer. The resultant slurry was coated into TOOL4 using a 75 mm (3 inches) wide metal scraper.

Separately a UV curable tie-coat comprising 99 parts TCDDMDA, and1 part Irgacure 651 was coated onto a sample of Tencel J-weight cloth using a 10 µm wire-wound bar coater.

The surface of TOOL4, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL4 was then peeled away from the cured slurry to yield a structured abrasive sample.

### COMPARATIVE EXAMPLE D

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP4 were homogeneously dispersed for one hour using a mechanical mixer. The resultant slurry was coated into TOOL1 using a 75 mm (3 inches) wide metal scraper.

Separately a UV curable tie-coat comprising 99 parts TCDDMDA, and1 part Irgacure 651 was coated onto a sample of Tencel J-weight cloth using a 10 µm wire-wound bar coater.

The surface of TOOL1, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL1 was then peeled away from the cured slurry to yield a structured abrasive sample.

### EXAMPLE 10

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP4 were homogeneously dispersed for one hour using a mechanical mixer. The resultant slurry was coated into TOOL2 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL2, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL2 was then peeled away from the cured slurry to yield a structured abrasive sample.

### EXAMPLE 11

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP4 were homogeneously dispersed for one hour using a mechanical mixer. The resultant slurry was coated into TOOL3 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL3, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL3 was then peeled away from the cured slurry to yield a structured abrasive sample.

### EXAMPLE 12

An abrasive slurry was prepared as follows: 23.68 parts of TCDDMDA, 0.84 parts of SCA, 0.24 parts of PI, 0.84 parts of SIL, 16.4 parts of KBF4, 29 parts A0180, and 29 parts SAP4 were homogeneously dispersed for one hour using a mechanical mixer. The resultant slurry was coated into TOOL4 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL4, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL4 was then peeled away from the cured slurry to yield a structured abrasive sample.

### COMPARATIVE EXAMPLE E

An abrasive slurry was prepared as follows: 23.68 parts of TCDDMDA, 0.84 parts of SCA, 0.24 parts of PI, 0.84 parts of SIL, 16.4 parts of KBF4, 58 parts AO180 were homogeneously dispersed for one hour using a mechanical mixer. The resultant slurry was coated into TOOL1 using a 75 mm (3 inches) wide metal scraper.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL1, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL1 was then peeled away from the cured slurry to yield a structured abrasive sample.

### COMPARATIVE EXAMPLE F

An abrasive slurry was prepared and coated onto TOOL2, as per Comparative Example E.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL2, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL2 was then peeled away from the cured slurry to yield a structured abrasive sample.

### COMPARATIVE EXAMPLE G

An abrasive slurry was prepared and coated onto TOOL3, as per Comparative Example E.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL3, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL3 was then peeled away from the cured slurry to yield a structured abrasive sample.

### COMPARATIVE EXAMPLE H

An abrasive slurry was prepared and coated onto TOOL4, as per Comparative Example E.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL4, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL4 was then peeled away from the cured slurry to yield a structured abrasive sample.

### COMPARATIVE EXAMPLE I

An abrasive slurry was prepared and coated onto TOOL5, as per Comparative Example E.

Separately a UV curable tie-coat consisting of 99 parts TCDDMDA, and1 part Irgacure 651 was coated onto a sample of Tencel J-weight cloth using a 10 µm wire-wound bar coater.

The surface of TOOL5, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL5 was then peeled away from the cured slurry to yield a structured abrasive sample.

### SINGLE DISC TEST

Unflexed structured abrasive articles, bearing a loop attachment system, were converted into 6-inch (15.2-cm) discs. These discs were attached to a backup pad mounted inside the Single Disc Tester and spun up to 2000 rpm. A stationary 10 mm by 10 mm by 300 mm 303 stainless steel workpiece, with an applied force of 20 N, is then abraded by the structured abrasive for 10 seconds. This is repeated a further 24 times, with the mass lost after each subsequent 10 second interval recorded, thus providing a stock removal profile over 250 seconds.

### EXAMPLES 13-16

Abrasive slurries was prepared and coated onto TOOL5, as per Examples 3,6,9, and 12, respectively.

In each case, a UV curable tie-coat consisting of 99 parts TCDDMDA, and 1 part Irgacure 651 was respectively coated onto a sample of Tencel J-weight cloth using a 10 µm wire-wound bar coater.

The surface of TOOL5, bearing the slurry, was then brought into contact with the tie-coated surface of the J-weight cloth, and pressure applied using a hand roller to ensure the slurry was evenly distributed and all tooling features filled. The resultant tooling, slurry, cloth laminate was then subjected to UV light, with a maximum intensity at 380 nanometers, through a Primarc Minicure UV Conveyor System using a D-type bulb at 100% power, and 5 m/min belt speed to cure. TOOL5 was then peeled away from the cured slurry to yield a structured abrasive sample.

### PERFORMANCE TEST

Abrasive articles obtained from Examples 1 thru 16, and Comparative Examples A thru D were laminated to a loop attachment system, using 3M 300LSE pressure sensitive adhesive, and a 6-inch (15.2-cm) disc cut from each sample. The abrasive discs were tested for stock removal on 10 × 10 mm 303 stainless steel bars on a Single Disc Tester (20N force, 2000 rpm). Performance data in tabulated in Table 2, below.

**TABLE 2**

| TOOL | EXAMPLE | ABRASIVE | STOCK REMOVAL, grams |
|---|---|---|---|
| TOOL1 | A | SAP1 | 9.83 |
| TOOL1 | B | SAP2 | 8.43 |
| TOOL1 | C | SAP3 | 9.28 |
| TOOL1 | D | SAP4 | 10.28 |
| TOOL1 | E | A0180 | 5.61 |
| TOOL2 | 1 | SAP 1 | 12.34 |
| TOOL2 | 4 | SAP2 | 11.81 |
| TOOL2 | 7 | SAP3 | 13.06 |
| TOOL2 | 10 | SAP4 | 12.11 |
| TOOL2 | F | A0180 | 6.44 |
| TOOL3 | 2 | SAP1 | 12.84 |
| TOOL3 | 5 | SAP2 | 11.51 |
| TOOL3 | 8 | SAP3 | 12.84 |
| TOOL3 | 11 | SAP4 | 11.92 |
| TOOL3 | G | A0180 | 6.92 |
| TOOL4 | 3 | SAP1 | 11.67 |
| TOOL4 | 6 | SAP2 | 12.03 |
| TOOL4 | 9 | SAP3 | 12.19 |
| TOOL4 | 12 | SAP4 | 10.60 |
| TOOL4 | H | A0180 | 7.35 |
| TOOL5 | 13 | SAP1 | 12.03 |
| TOOL5 | 14 | SAP2 | 10.81 |
| TOOL5 | 15 | SAP3 | 11.06 |
| TOOL5 | 16 | SAP4 | 8.10 |
| TOOL5 | I | A0180 | 7.15 |

FIG. 2 shows a plot of the above SINGLE DISC TEST results for various sizes of abrasive particles and shaped composite sizes.

## Claims

1. A structured abrasive article (100) comprising:
a backing (110) having first (125) and second (127) opposed major surfaces;
an abrasive layer (137) securely bonded to the first major surface (125) of the backing (110), wherein:
the abrasive layer (137) comprises shaped abrasive composites (135), wherein each shaped abrasive composite (135) has four sides, a height, and a base that faces the first major surface (125) of the backing (110), wherein the shaped abrasive composites (135) have an average height of 410 to 650 microns and an average side length at the base of 550 to 1450 microns, wherein the shaped abrasive composites (135) comprise non-magnetizable shaped abrasive platelets (150), **characterized in that** the non-magnetizable shaped abrasive platelets (150) have an average side length of 180 to 350 microns and an average thickness of 60 to 120 microns;
wherein at least 60 percent of the non-magnetizable shaped abrasive platelets comprise non-magnetizable triangular abrasive platelets.

2. The structured abrasive article (100) of claim 1, further comprising a tie layer (111) disposed between the backing (110) and the abrasive layer (137).

3. The structured abrasive article (100) of claim 1, wherein for at least some of the shaped abrasive composites (135), on a respective basis, the four sides meet at a single vertex.

4. The structured abrasive article (100) of claim 1, wherein at least a portion of the non-magnetizable shaped abrasive platelets (150) comprise non-magnetizable triangular abrasive platelets.

5. The structured abrasive article (100) of any one of claim 1, wherein the abrasive layer (137) comprises an array of the shaped abrasive composites (135).

6. The structured abrasive article (100) of claim 5, wherein the array comprises a close-packed array.

7. The structured abrasive article (100) of claim 1, wherein the structured abrasive composites (135) further comprise diluent crushed abrasive particles (152).

8. The structured abrasive article (100) of claim 7, wherein the ratio of the non-magnetizable shaped abrasive platelets (150) to the diluent crushed abrasive particles is 0.67 to 1.5.

9. The structured abrasive article (100) of claim 1, wherein the shaped abrasive composites (135) have an average height of 460 to 640 microns and an average side length at the base of 550 to 800 microns.

10. The structured abrasive article (100) of claim 1, wherein the shaped abrasive composites (135) have an average height of 460 to 510 microns and an average side length at the base of 600 to 800 microns.

11. The structured abrasive article (100) of claim 1, wherein the backing (110) is flexible.

12. The structured abrasive article (100) of claim 1, wherein the backing (110) is a polymer film.

13. A method of making a structured abrasive article (100), the method comprising the steps:
a) providing a production tool having a mold surface defining a plurality of precisely-shaped cavities having a depth of 410 to 650 microns and a side length at the mold surface of 550 to 1450 microns;
b) filling at least a majority of the precisely-shaped cavities with a slurry comprising non-magnetizable shaped abrasive platelets (150) dispersed in a curable organic binder precursor material, wherein the non-magnetizable shaped abrasive platelets (150) have a side length of 180 to 350 microns and a thickness of 60 to 120 microns, wherein at least 60 percent of the non-magnetizable shaped abrasive platelets comprise non-magnetizable triangular abrasive platelets;
c) contacting a tie layer (111) disposed on a major surface of a backing (110) with the mold surface of the production tool while the slurry is disposed within said at least a majority of the precisely-shaped cavities;
d) at least partially curing the curable organic binder precursor material to form shaped abrasive composites (135) secured to the major surface of the backing (110); and
e) separating the shaped abrasive composites (135) from the production tool,
wherein the method is carried out without influence of an intentionally applied external magnetic field.

14. The method of claim 13, wherein the shaped abrasive composites (135) have an average height of 460 to 640 microns and an average side length at the mold surface of 550 to 800 microns.

15. The method of claim 13, wherein the shaped abrasive composites (135) have an average height of 460 to 510 microns and an average side length at the mold surface of 600 to 760 microns.

## Patentansprüche

1. Ein strukturierter Schleifgegenstand (100) aufweisend:
einen Träger (110), der eine erste (125) und eine zweite (127) gegenüberliegende Hauptoberfläche hat;
eine Schleifschicht (137), die an die erste Hauptoberfläche (125) des Trägers (110) fest gebunden ist,
wobei:
die Schleifschicht (137) geformte Schleifverbundstoffe (135) aufweist, wobei jeder geformte Schleifverbundstoff (135) vier Seiten, eine Höhe und eine Basis, die der ersten Hauptoberfläche (125) des Trägers (110) zugewandt ist, hat, wobei die geformten Schleifverbundstoffe (135) eine durchschnittliche Höhe von 410 bis 650 Mikrometer und eine durchschnittliche Seitenlänge an der Basis von 550 bis 1450 Mikrometer haben, wobei die geformten Schleifverbundstoffe (135) nicht magnetisierbare Schleifplättchen (150) aufweisen, **dadurch gekennzeichnet, dass** die nicht magnetisierbaren geformten Schleifplättchen (150) eine durchschnittliche Seitenlänge von 180 bis 350 Mikrometer und eine durchschnittliche Dicke von 60 bis 120 Mikrometern haben,
wobei mindestens 60 Prozent der nicht magnetisierbaren geformten Schleifplättchen nicht magnetisierbare dreieckige Schleifplättchen aufweisen.

2. Der strukturierte Schleifgegenstand (100) nach Anspruch 1, ferner aufweisend eine Verbindungsschicht (111), die zwischen dem Träger (110) und der Schleifschicht (137) eingerichtet ist.

3. Der strukturierte Schleifgegenstand (100) nach Anspruch 1, wobei für mindestens einige der geformten Schleifverbundstoffe (135), auf einer jeweiligen Grundlage, die vier Seiten an einem einzigen Scheitelpunkt zusammentreffen.

4. Der strukturierte Schleifgegenstand (100) nach Anspruch 1, wobei mindestens ein Abschnitt der nicht magnetisierbaren geformten Schleifplättchen (150) nicht magnetisierbare dreieckige Schleifplättchen aufweist.

5. Der strukturierte Schleifgegenstand (100) nach einem der Ansprüche 1, wobei die Schleifschicht (137) eine Anordnung der geformten Schleifverbundstoffe (135) aufweist.

6. Der strukturierte Schleifgegenstand (100) nach Anspruch 5, wobei die Anordnung eine dichtgepackte Anordnung aufweist.

7. Der strukturierte Schleifgegenstand (100) nach Anspruch 1, wobei die strukturierten Schleifverbundstoffe (135) ferner verdünnende zerkleinerte Schleifteilchen (152) aufweisen.

8. Der strukturierte Schleifgegenstand (100) nach Anspruch 7, wobei das Verhältnis der nicht magnetisierbaren geformten Schleifplättchen (150) zu den verdünnenden zerkleinerten Schleifteilchen 0,67 bis 1,5 beträgt.

9. Der strukturierte Schleifgegenstand (100) nach Anspruch 1, wobei die geformten Schleifverbundstoffe (135) eine durchschnittliche Höhe von 460 bis 640 Mikrometer und eine durchschnittliche Seitenlänge an der Basis von 550 bis 800 Mikrometer haben.

10. Der strukturierte Schleifgegenstand (100) nach Anspruch 1, wobei die geformten Schleifverbundstoffe (135) eine durchschnittliche Höhe von 460 bis 510 Mikrometer und eine durchschnittliche Seitenlänge an der Basis von 600 bis 800 Mikrometer haben.

11. Der strukturierte Schleifgegenstand (100) nach Anspruch 1, wobei der Träger (110) flexibel ist.

12. Der strukturierte Schleifgegenstand (100) nach Anspruch 1, wobei der Träger (110) eine Polymerfolie ist.

13. Ein Verfahren zur Herstellung eines strukturierten Schleifgegenstands (100), das Verfahren aufweisend die Schritte:
a) Bereitstellen eines Produktionswerkzeugs, das eine Formoberfläche hat, die eine Mehrzahl von genau geformten Hohlräumen, die eine Tiefe von 410 bis 650 Mikrometer und eine Seitenlänge an der Formoberfläche von 550 bis 1450 Mikrometer haben, definiert;
b) Füllen mindestens einer Mehrheit der genau geformten Hohlräume mit einer Aufschlämmung, aufweisend nicht magnetisierbare geformte Schleifplättchen (150), die in einem härtbaren organischen Bindemittelvorläufermaterial dispergiert sind, wobei die nicht magnetisierbaren geformten Schleifplättchen (150) eine Seitenlänge von 180 bis 350 Mikrometer und eine Dicke von 60 bis 120 Mikrometer haben, wobei mindestens 60 Prozent der nicht magnetisierbaren geformten Schleifplättchen nicht magnetisierbare dreieckige Schleifplatten aufweisen;
c) Inberührungbringen einer Verbindungsschicht (111), die an einer Hauptoberfläche eines Trägers (110) eingerichtet ist, mit der Formoberfläche des Produktionswerkzeugs, während die Aufschlämmung innerhalb der mindestens einen Mehrheit der präzise geformten Hohlräume eingerichtet ist;
d) mindestens teilweises Aushärten des härtbaren organischen Bindemittelvorläufermaterials, um geformte Schleifverbundstoffe (135), die an der Hauptoberfläche des Trägers (110) befestigt sind, zu bilden; und
e) Trennen der geformten Schleifverbundstoffe (135) von dem Produktionswerkzeug,
wobei das Verfahren ohne Einfluss eines absichtlich angelegten externen Magnetfelds durchgeführt wird.

14. Das Verfahren nach Anspruch 13, wobei die geformten Schleifverbundstoffe (135) eine durchschnittliche Höhe von 460 bis 640 Mikrometer und eine durchschnittliche Seitenlänge an der Formoberfläche von 550 bis 800 Mikrometer haben.

15. Das Verfahren nach Anspruch 13, wobei die geformten Schleifverbundstoffe (135) eine durchschnittliche Höhe von 460 bis 510 Mikrometer und eine durchschnittliche Seitenlänge an der Formoberfläche von 600 bis 760 Mikrometer haben.

## Revendications

1. Article abrasif structuré (100) comprenant :
un support (110) ayant des première (125) et seconde (127) surfaces principales opposées ;
une couche abrasive (137) fermement liée à la première surface principale (125) du support (110),
dans lequel :
la couche abrasive (137) comprend des composites abrasifs façonnés (135), dans lequel chaque composite abrasif façonné (135) a quatre côtés, une hauteur et une base qui fait face à la première surface principale (125) du support (110), dans lequel les composites abrasifs façonnés (135) ont une hauteur moyenne de 410 à 650 microns et une longueur de côté moyenne au niveau de la base de 550 à 1450 microns, dans lequel les composites abrasifs façonnés (135) comprennent des plaquettes abrasives façonnées non magnétisables (150), **caractérisé en ce que** les plaquettes abrasives façonnées non magnétisables (150) ont une longueur de côté moyenne de 180 à 350 microns et une épaisseur moyenne de 60 à 120 microns ;
dans lequel au moins 60 pour cent des plaquettes abrasives façonnées non magnétisables comprennent des plaquettes abrasives triangulaires non magnétisables.

2. Article abrasif structuré (100) selon la revendication 1, comprenant en outre une couche de liaison (111) disposée entre le support (110) et la couche abrasive (137).

3. Article abrasif structuré (100) selon la revendication 1, dans lequel pour au moins certains des composites abrasifs façonnés (135), sur une base respective, les quatre côtés se rejoignent au niveau d'un seul sommet.

4. Article abrasif structuré (100) selon la revendication 1, dans lequel au moins une partie des plaquettes abrasives façonnées non magnétisables (150) comprend des plaquettes abrasives triangulaires non magnétisables.

5. Article abrasif structuré (100) selon l'une quelconque de la revendication 1, dans lequel la couche abrasive (137) comprend un réseau de composites abrasifs façonnés (135).

6. Article abrasif structuré (100) selon la revendication 5, dans lequel le réseau comprend un réseau dense.

7. Article abrasif structuré (100) selon la revendication 1, dans lequel les composites abrasifs structurés (135) comprennent en outre des particules abrasives broyées diluantes (152).

8. Article abrasif structuré (100) selon la revendication 7, dans lequel le rapport entre les plaquettes abrasives façonnées non magnétisables (150) et les particules abrasives broyées diluantes est de 0,67 à 1,5.

9. Article abrasif structuré (100) selon la revendication 1, dans lequel les composites abrasifs façonnés (135) ont une hauteur moyenne de 460 à 640 microns et une longueur de côté moyenne au niveau de la base de 550 à 800 microns.

10. Article abrasif structuré (100) selon la revendication 1, dans lequel les composites abrasifs façonnés (135) ont une hauteur moyenne de 460 à 510 microns et une longueur de côté moyenne au niveau de la base de 600 à 800 microns.

11. Article abrasif structuré (100) selon la revendication 1, dans lequel le support (110) est flexible.

12. Article abrasif structuré (100) selon la revendication 1, dans lequel le support (110) est une pellicule polymérique.

13. Procédé de fabrication d'un article abrasif structuré (100), le procédé comprenant les étapes consistant à :
a) fournir un outil de production ayant une surface de moule définissant une pluralité de cavités de forme précise ayant une profondeur de 410 à 650 microns et une longueur de côté au niveau de la surface de moule de 550 à 1450 microns ;
b) remplir au moins une majorité des cavités de forme précise d'une suspension comprenant des plaquettes abrasives façonnées non magnétisables (150) dispersées dans un matériau précurseur de liant organique durcissable, dans lequel les plaquettes abrasives façonnées non magnétisables (150) ont une longueur de côté de 180 à 350 microns et une épaisseur de 60 à 120 microns, dans lequel au moins 60 pour cent des plaquettes abrasives façonnées non magnétisables comprennent des plaquettes abrasives triangulaires non magnétisables ;
c) mettre en contact une couche de liaison (111) disposée sur une surface principale d'un support (110) avec la surface de moule de l'outil de production pendant que la suspension est disposée à l'intérieur de ladite au moins une majorité des cavités de forme précise ;
d) durcir au moins partiellement le matériau précurseur de liant organique durcissable afin de former des composites abrasifs façonnés (135) fixés sur la surface principale du support (110) ; et
e) séparer les composites abrasifs façonnés (135) de l'outil de production,
dans lequel le procédé est mise en oeuvre sans influence d'un champ magnétique externe appliqué intentionnellement.

14. Procédé selon la revendication 13, dans lequel les composites abrasifs façonnés (135) ont une hauteur moyenne de 460 à 640 microns et une longueur de côté moyenne au niveau de la surface de moule de 550 à 800 microns.

15. Procédé selon la revendication 13, dans lequel les composites abrasifs façonnés (135) ont une hauteur moyenne de 460 à 510 microns et une longueur de côté moyenne au niveau de la surface de moule de 600 à 760 microns.
